# EUROPEAN PATENT APPLICATION

(11) **EP 1 462 482 A1**
(43) Date of publication of application: **29.09.2004**
(21) Application number: 02783662.6
(22) Date of filing: 27.11.2002
(51) Int. Cl.: C08L 9/02, C08L 33/12

(54) **RUBBER VULCANIZATE, PROCESS FOR ITS PRODUCTION, AND POLYMER COMPOSITION, RUBBER COMPOSITION AND VULCANIZABLE RUBBER COMPOSITION USED IN THE PROCESS**

(30) Priority: 30.11.2001 JP 2001366360
(71) Applicant: Zeon Corporation, Tokyo 100-8323 (JP)
(72) Inventor: TOYA, Takashi, c/o ZEON CORPORATION, Tokyo 100-8323 (JP); KOMIYAMA, Shinji, c/o ZEON CORPORATION, Tokyo 100-8323 (JP); YOSHIMURA, Tsutomu, c/o ZEON CORPORATION, Tokyo 100-8323 (JP)
(74) Representative: Albrecht, Thomas, Dr.
(86) International application number: PCT/JP2002/012391
(87) International publication number: WO 2003/046073

(57) **Abstract**

This invention provides a rubber vulcanizate of a nitrile group-containing copolymer rubber, exhibiting enhanced ozone resistance. The rubber vulcanizate is made by heat-treating a polymer composition comprising 40-90 wt.% of a nitrile group-containing copolymer rubber (1), and 60-10 wt.% of particles having an average particle diameter of not larger than 10 µm comprised of an acrylic resin (2) comprising methyl acrylate or methacrylate units as the main structural units and containing not larger than 0.01 eq. wt., per 100 g of acrylic resin (2), of a crosslink-forming functional group, at a temperature in the range of (T+20)°C to (T+90)°C wherein T is a temperature which is selected from glass transition temperature of acrylic resin (2) and melting temperature of acrylic resin (2), and is higher than the other of the two temperatures, to thereby prepare a rubber composition; incorporating a vulcanizer in the rubber composition; and vulcanizing the thus-obtained vulcanizable rubber composition.

## Description

### Technical Field

This invention relates to a nitrile group-containing copolymer rubber. More particularly it relates to a vulcanizate of a nitrile group-containing copolymer rubber, which has good ozone resistance, and a process for producing the vulcanizate, and a polymer composition, a rubber composition and a vulcanizable rubber composition, which are used for the production of the vulcanizate.

### Background Art

A nitrile group-containing copolymer rubber is a representative rubber used in various fields, but, this rubber has a problem such that it has poor ozone resistance and, in the case when an antiozonant is not incorporated in the rubber, the rubber is easily deteriorated. An antiozonant minimizes or prevents the deterioration of rubber due to a mechanism such that the antiozonant easily reacts with radicals, generated by ozone, before the radicals react with rubber molecules. Therefore, the antiozonant itself is gradually deteriorated by ozone and loses its function with time. Thus, an ozonant can retard the progress of deterioration of rubber molecules, but, its function is not complete, and a nitrile group-containing copolymer rubber having an antiozonant incorporated therein does not exhibit good ozone resistance over a long period of time.

A blend of a nitrile group-containing copolymer rubber with a vinyl chloride resin exhibits good oil resistance as well as good ozone resistance, and is widely used for automobile parts such as a fuel hose (U.S. Patent No. 2,330,353). However, halogen-containing resins including a vinyl chloride resin have a problem such that, when the resin is disposed as a waste, halogen tends to be liberated and cause an environmental pollution. Therefore, new substitute materials are desired.

As the substitute materials, there can be mentioned, for example, a blend of a nitrile group-containing copolymer rubber with a polyamide resin (Shin-ichiro Gotoh; Nippon Gomu Kyokai-Shi, vol. 73, p247, 2000), a blend of a nitrile group-containing copolymer rubber with a polypropylene resin (Hirokazu Iino; Nippon Gomu Kyoukai-Shi, vol. 38, page 7, 1965), and a blend of a nitrile group-containing copolymer rubber with a styrene -acrylonitrile copolymer resin (Toshio Nishi; Nippon Gomu Kyoukai-Shi, vol. 68, page 834, 1995). However, ozone resistance of rubber vulcanizates of these rubber blends is still not satisfactory.

Recently, a blend of a nitrile group-containing copolymer rubber with a vinyl resin having a crosslinkable functional group has been proposed (Japanese Unexamined Patent Publication No. 2001-226527). This patent publication teaches that a rubber vulcanizate made from a blend of a nitrile group-containing copolymer rubber with methyl methaorylate polymer has poor ozone resistance, but, a rubber vulcanizate made from a blend of a nitrile group-containing copolymer rubber with methyl methacrylate polymer, modified with methaorylic acid, has good ozone resistance. However, the rubber vulcanizate does not completely fulfill a high level of requirement for ozone resistance, which has been desired in recent years. Thus, a rubber vulcanizate having more enhanced ozone resistance is eagerly desired.

### Disclosure of the Invention

A primary object of the present invention is to provide a modified nitrile group-containing copolymer rubber material capable of giving a rubber vulcanizate exhibiting a greatly improved ozone resistance.

The present inventors made extensive research to attain the above-mentioned object, and found that a rubber vulcanizate having good oil resistance as well as good ozone resistance can be obtained by a process wherein a polymer composition comprising a nitrile group-containing copolymer rubber and a specific acrylic resin particle is heat-treated under specific conditions to prepare a rubber composition, and a vulcanizable rubber composition is prepared by incorporating a vulcanizer to the rubber composition, and then, is vulcanized. On the basis of this finding, the present invention has been completed.

Thus, in accordance with the present invention, there is provided a process for producing a rubber vulcanizate comprising:
heat-treating a polymer composition comprising 40 to 90% by weight of a nitrile group-containing copolymer rubber (1), and 60 to 10% by weight of particles having an average particle diameter of not larger than 10 µm comprised of an acrylic resin (2) comprising monomer units selected from methyl acrylate units and methyl methacrylate units as the main structural units and containing not larger than 0.01 equivalent weight, per 100 g of the acrylic resin (2), of a crosslink-forming functional group, at a temperature in the range of (T+20)°C to (T+90)°C wherein T is a temperature which is selected from the glass transition temperature of acrylic resin (2) and the melting temperature of acrylic resin (2), and is higher than the other of the two temperatures, to thereby prepare a rubber composition;
incorporating a vulcanizer in the rubber composition to prepare a vulcanizable rubber composition; and
vulcanizing the vulcanizable rubber composition.

In accordance with the present invention, there are further provided a rubber vulcanizate produoed by the above-mentioned process; and, as intermediate materials, the above-mentioned polymer composition, the above-mentioned rubber composition, and the above-mentioned vulcanizable rubber composition.

In the present invention, the above-mentioned polymer composition comprising a nitrile group-containing copolymer rubber (1), and particles comprised of an acrylic resin (2) comprising monomer units of methyl acrylate units and/or methyl methacrylate units, is hereinafter referred to merely as "polymer composition"; the above-mentioned rubber composition, which has been prepared by heat-treating the polymer composition and is free from a vulcanizer, is hereinafter referred to merely as "rubber composition"; the above-mentioned vulcanizable rubber composition, which has been prepared by incorporating a vulcanizer in the rubber composition, is referred to merely as "vulcanizable rubber composition"; the rubber vulcanizate, which has been prepared by vulcanizing the vulcanizable rubber composition, is hereinafter referred to merely as "rubber vulcanizate"; and the step of heating the polymer composition to prepare the rubber composition is hereinafter referred to merely as "heat treatment step".

### Best Mode for Carrying Out the Invention

The nitrile group-containing copolymer rubber (1) used in the present invention a rubber prepared by compolymerization of an α,β-ethylenically unsaturated nitrile monomer with a copolymerizable monomer.

The content of α,β-ethylenically unsaturated nitrile monomer units in the nitrile group-containing copolymer rubber (1) is preferably in the range of 10 to 60% by weight, more preferably 12 to 55% by weight and especially preferably 15 to 50% by weight. If the content of α,β-ethylenically unsaturated nitrile monomer units is too small, the resulting rubber vulcanizate has poor oil resistance. In contrast, if the content of α,β-ethylenically unsaturated nitrile monomer units is too large, the resulting vulcanizate has poor cold resistance. As specific examples of the α,β-ethylenically unsaturated nitrile monomer, there can be mentioned acrylonitrile, methacrylonitrile and α-chloroacrylonitrile. Of these, acrylonitrile is preferable.

The monomer to be copolymerized with the α,β-ethylenically unsaturated nitrile monomer for the preparation of the nitrile group-containing copolymer rubber (1) includes, for example, conjugated diene monomers, non-conjugated diene monomers, α-olefin monomers, aromatic vinyl monomers, fluorine-containing vinyl monomers, α,β-ethylenically unsaturated monocarboxylic acid monomers, α,β-ethylenically unsaturated polycarboxylic acid monomers and acid anhydride monomers thereof, α,β-ethylenically unsaturated carboxylic acid ester monomers, and copolymerizable antioxidants.

As specific examples of the conjugated diene monomers, there can be mentioned 1,3-butadiene, isoprene, 2,3-dimethyl-1,3-butadiene and 1,3-pentadiene. Of these, 1,3-butadiene is preferable. As specific examples of the non-conjugated diene monomers, there can be mentioned 1,4-pentadiene, 1,4-hexadiene, vinylnorbornene and dicyclopentadiene. Preferable non-conjugated diene monomers have 5 to 12 carbon atoms. As specific examples of the α-olefin monomers, there can be mentioned ethylene, propylene, 1-butene, 4-methyl-1-pentene, 1-hexene and 1-octene. Preferable α-olefin monomers have 2 to 12 carbon atoms. As specific examples of the aromatic vinyl monomers, there can be mentioned styrene, α-methylstyrene and vinylpyridine. As specific examples of the fluorine-containing vinyl monomers, there can be mentioned fluoroethyl vinyl ether, fluoropropyl vinyl ether, o-trifluoromethylstyrene, vinyl pentafluorobenzoic acid, difluoroethylene and tetrafluoroethylene.

As specific examples of the α,β-ethylenically unsaturated monocarboxylic acid monomers, there can be mentioned acrylic acid and methacrylic acid. As specific examples of the α,β-ethylenically unsaturated polycarboxylic acid monomers, there can be mentioned itaconic acid, fumaric acid and maleic acid. As specific examples of the α,β-ethylenically unsaturated polycarboxylic acid anhydride monomers, there can be mentioned itaconic anhydride and maleic anhydride. As specific examples of the α,β-ethylenically unsaturated carboxylic acid ester monomers, there can be mentioned acrylates and methacrylates, which have an alkyl group with 1 to 18 carbon atoms, such as methyl acrylate, ethyl acrylate, n-dodecyl acrylate, methyl methacrylate and ethyl methacrylate: acrylates and methacrylates, which have an alkoxyalkyl group with 2 to 12 carbon atoms, such as methoxymethyl acrylate and methoxyethyl methacrylate; acrylates and methacrylates, which have a oyanoalkyl group with 2 to 12 carbon atoms, such as α-cyanoethyl acrylate, β-cyanoethyl acrylate and oyanobutyl methacrylate; acrylates and methacrylates, which have a hydroxyalkyl group with 1 to 12 carbon atoms, such as 2-hydroxyethyl acrylate, hydroxypropyl acrylate and 2-hydroxyethyl methacrylate; α,β-ethylenically unsaturated dicarboxylic acid monoalkyl esters such as monoethyl maleate and mono-n-butyl itaconate; α,β-ethylenically unsaturated dicarboxylic acid dialkyl esters such as dimethyl maleate, dimethyl fumarate, dimethyl itaconate and diethyl itaconate; amino group-containing α,β-ethylenically unsaturated carboxylic acid esters such as dimethylaminomethyl acrylate and diethylaminoethyl acrylate; acrylates and methaorylate, which have a fluoroalkyl group, such as trifluoroethyl acrylate and tetrafluoropropyl methacrylate; and fluorine-substituted benzyl acrylate and benzyl methaorylate such as fluorobenzyl acrylate and fluorobenzyl methacrylate. As specific examples of the copolymerizable antioxidants, there can be mentioned N-(4-anilinophenyl)acrylamide, N-(4-anilinophenyl)-methacrylamide, N-(4-anilinophenyl)cynnnamamide, N-(4-anilinophenyl)crotonamide, N-phenyl-4-(3-vinylbenzyloxy)aniline and N-phenyl-4-(4-vinylbenzyloxy)aniline.

The nitrile group-containing copolymer rubber (1) used in the present invention is preferably substantially free from halogen. By the phrase "substantially free from halogen", we mean that the content of halogen in the copolymer rubber (1) is preferably not larger than 0.5% by weight, more preferably not larger than 0.1% by weight and especially preferably 0% by weight.

The nitrile group-containing copolymer rubber (1) preferably has a Mooney viscosity (ML₁₊₄, 100°C) in the range of 10 to 300, more preferably 20 to 250 and especially preferably 30 to 200. If the Mooney viscosity is too small, the resulting rubber vulcanizate is liable to have poor mechanical properties. In contrast, if the Mooney viscosity is too large, the rubber composition tends to have poor processability.

The process for producing the nitrile group-containing copolymer rubber (1) is not particularly limited, and a conventional polymerization process can be adopted.

The acrylic resin (2) constituting particles used in the present invention comprises monomer units selected from methyl acrylate units and methyl methaorylate units as the main structural units and contains not larger than 0.01 equivalent weight, per 100 g of the acrylic resin (2), of a crosslink-forming functional group. By the phrase "as the main structural units" as used herein, we mean that the acrylic resin (2) comprises at least 50% by weight, preferably at least 70% by weight and more preferably at least 90% by weight of monomer units selected from methyl acrylate units and methyl methacrylate units.

The acrylic resin (2) may be any of a methyl acrylate homopolymer, a methyl methacrylate homopolymer, a methyl acrylate-methyl methacrylate copolymer, and a copolymer of at least one of methyl acrylate and methyl methacrylate with other copolymerizable monomer. The copolymerizable monomer is not particularly limited provided that it is capable of being copolymerized with methyl acrylate and/or methyl methacrylate. Preferably, the copolymerizable monomer does not introduce unsaturated bonds in the main chain of polymer, and does not introduce a crosslink-forming functional group in the main chain of polymer. Such copolymerizable monomer includes, for example, acrylic acid ester monomers other than methyl acrylate, methacrylic acid ester monomers other than methyl methacrylate, aromatic vinyl monomers, vinyl ester monomers and vinyl ether monomers. As specific examples of the acrylic acid ester monomers, there can be mentioned ethyl acrylate, propyl acrylate, butyl acrylate, isobutyl acrylate, tert.-butyl acrylate, 2-ethylhexyl acrylate and octyl acrylate. As specific examples of the methacrylic acid ester monomers, there can be mentioned ethyl methacrylate, propyl methacrylate, butyl methacrylate, isobutyl methacrylate, tert.-butyl methacrylate, 2-ethylhexyl acrylate and octyl acrylate. As specific examples of the aromatic vinyl monomers, there can be mentioned styrene, vinyltoluene and α-methylstyrane. As specific examples of the vinyl ester monomers, there can be mentioned vinyl acetate and vinyl propionate. As specific examples of the vinyl ether monomers, there can be mentioned methyl vinyl ether, ethyl vinyl ether and hydroxylbutyl vinyl ether. Of these, acrylic acid ester monomers other than methyl acrylate, and methacrylic acid ester monomers other than methyl methacrylate are preferable. Ethyl acrylate, propyl acrylate, butyl acrylate, ethyl methacrylate, propyl methacrylate and butyl methacrylate are especially preferable.

Preferable copolymerizable monomers are substantially free from halogen. The content of halogen in the acrylic resin (2) is preferably not larger than 0.5% by weight, more preferably not larger than 0.1% by weight and especially preferably 0% by weight.

The acrylic resin (2) contains not larger than 0.01 equivalent weight, and preferably not larger than 0.005 equivalent weight, per 100 g of the acrylic resin (2), of a crosslink-forming functional group. Most preferably the acrylic resin (2) does not contain a crosslink-forming functional group. The crosslink-forming functional group has a function of forming crosslinks among polymer molecules of the acrylic resin (2), when the resin is heated. As specific examples of the crosslink-forming functional group, there can be mentioned an epoxy group, a carboxyl group, an acid anhydride group, an amino group, an imino group, an amide group and a hydroxyl group. Particles of the acrylic resin (2) not containing or containing only a very minor amount of a crosslink-forming functional group becomes smaller in particle size in the matrix of nitrile group-containing copolymer rubber (1) when the particles are heated. In contrast, if the acrylic resin contains a large amount of crosslink-forming functional group, when its particles are heated, crosslinks are formed among polymer molecules of the acrylic resin with the result that the particles do not become smaller in size and the resultant rubber vulcanizate has poor ozone resistance. The crosslink-forming functional group can be introduced into the acrylic resin, for example, by a process comprising copolymerizing a monomer having a crosslink-forming functional group such as acrylic acid or methacrylic acid, when the nitrile group-containing copolymer rubber is produced; a process wherein a monomer having an acid anhydride group such as maleic anhydride is copolymerized when the nitrile group-containing copolymer rubber is produced, and then, the acid anhydride group of a copolymer is hydrolyzed to be thereby converted to a carboxyl group; or a process comprising conducting an addition reaction such as maleic addition reaction after copolymerization for the preparation of nitrile group-containing copolymer rubber.

The weight average molecular weight of the acrylic resin (2) is not particularly limited, but, is preferably in the range of 50,000 to 4,000,000, more preferably 100,000 to 2,000,000 and especially preferably 200,000 to 1,000,000, as measured by gel permeation chromatography and as expressed by that of polystyrene. When the weight average molecular weight is too small, the resulting rubber vulcanizate tends to have poor ozone resistance. In contrast, when the weight average molecular weight is too large, the resulting rubber vulcanizate tends to have poor processability.

The process for producing the acrylic resin (2) is not particularly limited, but preferably, copolymer particles are produced directly by polymerization, for example, by an emulsion polymerization or suspension polymerization procedure. In the emulsion polymerization or suspension polymerization, a seed polymerization can be carried out. The particles of acrylic resin (2) used in the present invention has an average particle diameter not larger than 10 µm, preferably not larger than 2 µm, and more preferably not larger than 0.5 µm. If the average particle diameter is too large, the resultant rubber vulcanizate has poor ozone resistance. In the case when the particles of acrylic resin (2) are produced directly by polymerization, as mentioned above, the particle diameter can be controlled by varying the polymerization conditions. Alternatively, the particle diameter can be controlled by pulverizing the particles of acrylic resin (2) as obtained in a solid state by a pulverizing apparatus such as a jet air stream pulverizer, a mechanical shock pulverizer, a roll mill, a hammer mill and an impeller breaker, and then, classifying the pulverized product by classification such as air classification or sieve classification.

The polymer composition of the present invention comprises 40 to 90% by weight, preferably 60 to 80% by weight, Of the nitrile group-containing copolymer rubber (1), and 60 to 10% by weight, preferably 40 to 20% by weight, of particles comprised of the acrylic resin ( 2 ). The particles of acrylic resin (2) are dispersed in a matrix of the nitrile group-containing copolymer rubber (1). If the relative amount of nitrile group-containing copolymer rubber (1) is too small, the resultant rubber vulcanizate has poor rubber elasticity. In contrast, if the relative amount of the copolymer rubber (1) is too small, the resultant rubber vulcanizate has poor ozone resistance.

The process for producing the polymer composition of the present invention is not particularly limited, and a conventional production process can be adopted, which includes, for example, a dry blend process wherein the nitrile group-containing copolymer rubber (1) and the particles of acrylic resin (2) are mixed together by a mixing kneader at a high temperature, and a latex co-precipitation process wherein latex of the nitrile group-containing copolymer rubber (1) and latex of particles of the acrylic resin (2) are mixed together to coagulate the latexes, and then, the coagulated latexes are dried.

Various ingredients can be incorporated in the polymer composition. The ingredients can be chosen from those which are widely used as ingredients for rubber composition and are not subject to chemical change when the polymer composition is heated. The ingredients are explained below. Rubbers and resins, other than the nitrile group-containing copolymer rubber (1) and the acrylic resin (2), can be incorporated in the polymer composition. An antioxidant can be added to the polymer composition to prevent or minimize the deterioration of rubber or resin occurring when the polymer composition is heated.

The heat-treatment for converting the polymer composition to a rubber composition is carried out at a temperature in the range of (T+20)°C to (T+90)°C, preferably (T+30)°C to (T+80)°C, and more preferably (T+40)°C to (T+70)°C, wherein T is a temperature (°C) which is selected from the glass transition temperature of acrylic resin (2) and the melting temperature of acrylic resin (2), and is higher than the other of the two temperatures. Some kinds of acrylic resins (2) have a glass transition temperature but do not have a melting temperature. In these acrylic resins (2), T means the glass transition temperature. If the temperature of heat-treatment is too low, particles of the acrylic resin (2) are difficult to become small in particle size to the desired extent, and the resultant rubber vulcanizate has poor ozone resistance. In contrast, if the temperature of heat-treatment is too high, the nitrile group-containing copolymer rubber is easily deteriorated by heat, and the resultant rubber vulcanizate tends to have poor strength and poor ozone resistance.

The heat-treatment time is not particularly limited, but is preferably in the range of 0.5 to 300 minutes, more preferably 2 to 60 minutes.

The procedure for heat-treatment is not particularly limited, but, the polymer composition is heated preferably while it is kneaded, for example, by an extruder such as a single screw extruder or a twin-screw extruder: a closed type kneader such as a kneader, a bambury mixer or an internal mixer; or a roll kneader.

A vulcanizer is incorporated in the rubber composition to prepare a vulcanizable rubber composition. The vulcanizer includes, for example, a sulfur-containing vulcanizer, an organic peroxide and a polyamine vulcanizer.

As specific examples of the sulfur-containing vulcanizer, there can be mentioned sulfur such as powdery sulfur and precipitated sulfur; and organic sulfur compounds such as 4,4'-dithiomorpholine, tetramethylthiuram disulfide, tetraethylthiuram disulfide and high-moleoular-weight polysulfur compounds.

The organic peroxide includes, dialkyl peroxides, diacyl peroxides and peroxyesters. As specific examples of the organic peroxides, there can be mentioned dialkyl peroxides such as dicumyl peroxide, di-t-butyl peroxide, 2,5-dimethyl-2,5-di-(t-butylperoxy)-3-hexyne, 2,5-dimethyl-2,5-di-(t-butylperoxy)hexane and 1,3-bis(t-butylperoxyisopropyl)benzene; diacyl peroxides such as benzoyl peroxide and isobutyryl peroxide; and peroxy esters such as 2,5-dimethyl-2,5-bis(benzoylperoxy)hexane and t-butylperoxyisopropyl carbonate.

The polyamine vulcanizer is a compound having at least two amino groups, which has a structure such that two or more hydrogen atoms in an aliphatic or aromatic hydrocarbon are substituted by an amino group, or a hydrazide structure represented by -CONHNH₂. The polyamine vulcanizer includes, for example, aliphatic polyamines, aromatic polyamines and compounds having two or more hydrazide structures. As specific examples of the polyamine vulcanizer, there can be mentioned aliphatic polyamines such as hexamethylenediamine, hexamethylenediamine carbamate, tetramethylenepentamine, hexamethylenediaminecinnamaldehyde adduct and hexamethylenediamine-dibenzoate salt; aromatic polyamines such as 4,4'-methylenedianiline, 4,4'-oxydiphenylamine, m-phenylenediamine, p-phenylenediamine, 4,4'-methylenebis(o-chloroaniline); and compounds having two or more hydrazide structures such as isophthalic acid dihydrazide, adipic acid dihydrazide and sebacic acid dihydrazide.

The amount of vulcanizer varies depending upon the particular kind of vulcanizer, but is usually in the range of 0.1 to 10 parts by weight, preferably 0.3 to 7 parts by weight, and more preferably 0.5 to 5 parts by weight, based on 100 parts by weight of the nitrile group-containing copolymer rubber (1). When the amount of vulcanizer is too small, the crosslinking density is low, and the permanent set is large. In contrast, when the amount of vulcanizer is too large, the flex fatigue resistance is reduced.

In the case when a sulfur-containing vulcanizer is used as a vulcanizer, a vulcanization accelerator is usually used in combination with the vulcanizer. The vulcanization accelerator includes, for example, zinc oxide, a sulfenamide vulcanization accelerator, a guanidine vulcanization accelerator, a thiazole vulcanization accelerator, a thiuram vulcanization accelerator and a dithio acid vulcanization accelerator. The amount of vulcanization accelerator is not particularly limited, and can appropriately be chosen depending upon the use of vulcanizate, the properties required for vulcanizate, the kind of sulfur-containing vulcanizer and the kind of vulcanization accelerator.
In the case when an organic peroxide is used as a vulcanizer, a vulcanization aid is usually used in combination with the vulcanizer. As specific examples of the vulcanization aid, there can be mentioned triallyl cyanurate, trimethylolpropane trimethacrylate and N,N'-m-phenylenebismaleimide. The vulcanization aid can be used as a dispersion in clay, calcium carbonate or silica to improve processability of the polymer composition. The amount of vulcanization aid is not particularly limited, and can appropriately be chosen depending upon the use of vulcanizate, the properties required for vulcanizate, the kind of peroxide vulcanizer and the kind of vulcanization aid.

Various ingredients which are generally used for rubber can be incorporated in the rubber composition, and, as specific examples thereof, there can be mentioned a reinforcing agent such as carbon black and silica; a filler such as calcium carbonate, clay, talc and calcium silicate; metal salts of α,β-unsatuated carboxylic acid; and a pigment. Rubbers other than the nitrile group-containing copolymer rubber (1), and resins other than the acrylic resin (2) can be incorporated in the rubber composition, provided that the effect of the present invention can be obtained.

In the case when ingredients are further added to the rubber composition, in addition to the ingredients added to the polymer composition, the additional ingredients are usually added after the heat-treatment. When the additional ingredients are added to the rubber composition, the kneading is carried out at a temperature lower than the highest temperature adopted at the heat-treatment. The procedure for addition may be those which are usually adopted in rubber composition. The addition of a vulcanizer, a vulcanization accelerator and a vulcanization aid to the rubber composition to prepare a vulcanizable rubber composition is carried out at a temperature lower than the vulcanization initiation temperature.

A rubber vulcanizate is obtained by heating the vulcanizable rubber composition to a temperature which is not lower than the vulcanization initiation temperature of a vulcanizer and is lower than the highest temperature adopted for the heat treatment. For general vulcanizers, the vulcanization temperature at which vulcanization is carried out is preferably in the range of 100 to 200°C, more preferably 130 to 190°C, and especially preferably 140 to 180°C. An appropriate vulcanization temperature can be determined depending upon the properties of acrylic resin (2). When the vulcanization temperature is too low, a long period of time is required for completion of the vulcanization step, and the vulcanization density is liable to be low. In contrast, when the vulcanization temperature is too high, defective moldings tend to be produced. The vulcanization time varies depending upon the vulcanization procedure, the vulcanization temperature and the shape of vulcanizate, but is usually chosen in the range of one minute to 5 hours from a view point of vulcanization density and production efficiency. In some cases, the surface portion of a shaped article is easily vulcanized, but the central portion thereof is difficult to vulcanize to the desired extent. In these cases, secondary vulcanization can be additionally conducted.

The heating procedure for vulcanization can be appropriately chosen from those which are generally adopted for vulcanization of rubber, such as press heating, steam heating, oven heating and hot air heating.

The invention will now be specifically described by the following examples and comparative examples. Parts and % in the examples and working examples are by weight unless otherwise specified.

### Mooney Viscosity

Mooney viscosity (ML₁₊₄, 100°C) was measured according to JIS K6300.
Molecular Weight
Molecular weight of an acrylic resin was measured by gel permeation chromatography using tetrahydrofuran as a solvent and expressed in terms of that of polystyrene as a standard material.

### Particle Size

Average particle diameter of an acrylic resin was measured by a light scattering particle counter apparatus (model N4, available form Coulter Co.).

### Glass Transition Temperature

Glass transition temperature of an acrylic resin was measured by a differential scanning calorimeter (DSC). The acrylic resins used in the examples, the comparative examples and the synthetic examples had no melting temperature.

### Ozone Resistance

Ozone resistance was evaluated according to JIS K6259 by observing the state of sample after maintaining the sample for 24 hours, 48 hours and 72 hours under conditions such that temperature: 40°C, ozone concentration: 50 pphm, and elongation: 30%. The observation results were expressed by the following ratings.

### Rating NC: Occurrence of cracks was not observed

Ratings B-1 through C-5: alphabet letters means numbers of cracks. The number of cracks expressed by C is larger than that by B. The figures means size of cracks. The larger the figure, the larger the size of cracks.

Break: The size of cracks was very large and a specimen was broken.

### Synthesis Example 1 (Preparation of particles of acrylic resin (2))

A reaction vessel was charged with 150 parts of ion-exchanged water, 0.1 part of sodium dodecylbenzenesulfonate (emulsifying agent), 0.3 part of ammonium persulfate (polymerization Initiator) and 100 parts of methyl methacrylate. The content was maintained at 80°C, while being stirred, to carry out a polymerization. When 12 hours elapsed, the polymerization was stopped. A portion of the thus-obtained polymerization liquid was taken to measure the weight of solid in the liquid. The polymerization conversion was 98.3% and the solid content was about 39%. The thus-obtained particles of methyl methacrylate polymer A had an average particle diameter of about 0.1 µm, which satisfy the requirement for acrylic resin (2) used in the present invention. The methyl methaorylate polymer A had a weight average molecular weight of about 1,100,000, and did not contain a crosslink-forming functional group. The polymerization liquid was filtered to collect particles of methyl methacrylate polymer. The obtained particles were dispersed in pure water and the obtained aqueous dispersion was filtered to collect particles. This procedure was repeated twice, and then, the collected particles were dried to obtain particles of methyl methacrylate polymer A. The particles had a glass transition temperature of 106°C.

### Example 1 (Dry blending method)

70 parts of a nitrile group-containing copolymer rubber 1 (Nipol 1041, available from Zeon Corporation, acrylonitrile-butadiene copolymer rubber, acrylonitrile monomer unit content: 40%, Mooney viscosity (ML₁₊₄, 100°C): 82.5) and 30 parts of particles of methyl methacrylate polymer A obtained in Synthetic Example 1 were subjected to roll kneading at 45°C to prepare a sheet-form rubber composition. The temperature of rolls was elevated to 180°C, and the sheet-form rubber composition was wound around rolls to conduct roll kneading at the high temperature for 20 minutes. Then the sheet-form rubber composition was taken from and cooled to a temperature of 40°C. The rolls were thoroughly cooled to 45°C, and then, the sheet-form rubber composition was again wound around the rolls, and, kneaded together with 60 parts of carbon black (Asahi #50 available from Asahi Carbon K.K.), 5 parts of dioctyl phthalate as a plasticizer, 15 parts of adipic acid ester (Adekasizer RS-107, available from Asahi Denka K.K.), 1 part of stearic acid, 5 parts of zinc oxide (#1), 0.5 part of sulfur (325 mesh passed), 1.5 parts of N-cyclohexyl-2-benzothiazylsulfenamide and 1.5 parts of tetramethylthiuram disulfide, to prepare a vulcanizable rubber composition. The vulcanizable rubber sheet was pressed at 160°C for 20 minutes, whereby shaping and vulcanization were simultaneously carried out to prepare a sheet-form rubber vulcanizate having a thickness of 2 mm. The sheet-form rubber vulcanizate was punched to prepare a specimen. The ozone resistance was evaluated. The results are shown in Table 1.

### Example 2 (Co-precipitation method)

70 parts (as solid content) of latex of nitrile group-containing copolymer rubber 2 (acrylonitrile-butadiene copolymer rubber, acrylonitrile monomer unit content: 40%, Mooney viscosity (ML₁₊₄, 100°C): 78, rubber particle diameter: 0.1 µm, solid concentration: 25%) and 30 parts (as solid content) of the polymerization liquid obtained in Synthetic Example 1 were mixed together, and the mixed liquid was filtered to collect solid content. The solid content was dried, and then, 5 parts of dioctyl phthalate was added to the dried product. The mixture was subjected to roll kneading at 45°C to prepare a sheet-form polymer composition. By the same procedures as described in Example 1, a rubber composition, a vulcanizable rubber composition and a rubber vulcanizate were prepared in turn. The ozone resistance was evaluated. The results are shown in Table 1.

### Example 3

The procedures described in Example 1 were repeated wherein the amount of nitrile group-containing copolymer rubber 1 was changed to 60 parts and the amount of particles of methyl methacrylate polymer A was changed to 40 parts with all other conditions remaining the same. The results are shown in Table 1.

### Example 4

The procedures described in Example 1 were repeated wherein the amount of nitrile group-containing copolymer rubber 1 was changed to 80 parts and the amount of particles of methyl methacrylate polymer A was changed to 20 parts with all other conditions remaining the same. The results are shown in Table 1.

### Example 5

The procedures described in Example 1 were repeated wherein nitrile group-containing copolymer rubber 2 (Nipol 1042, available from Zeon Corporation, acrylonitrile-butadiene copolymer rubber, acrylonitrile monomer unit content: 33.5%, Mooney viscosity (ML₁₊₄, 100°C): 77.5, iodine value: 313) was used instead of nitrile group-containing copolymer rubber 1 with all other conditions remaining the same. The results are shown in Table 1.

### Example 6

The procedures described in Example 1 were repeated wherein nitrile group-containing copolymer rubber 3 (Nipol DN101, available from Zeon Corporation, acrylonitrile-butadiene copolymer rubber, acrylonitrile monomer unit content: 42.5%, Mooney viscosity (ML₁₊₄, 100°C): 77.5, iodine value: 270) was used instead of nitrile group-containing copolymer rubber 1 with all other conditions remaining the same. The results are shown in Table 1.

### Example 7

The procedures described in Example 1 were repeated wherein particles of methyl methacrylate polymer B (Acryl paste F320, available from Zeon Kasei K.K., average particle diameter: 1 µ m, weight average molecular weight: about 3,000,000, glass transition temperature: 107°C, satisfying the requirements for acrylic resin (2)) was used instead of methyl methacrylate polymer A prepared in Synthesis Example 1 with all other conditions remaining the same. The results are shown in Table 1.

### Comparative Example 1

The procedures described in Example 1 were repeated wherein particle of methyl methacrylate polymer A were not incorporated and the amount of nitrile group-containing copolymer rubber 1 was changed to 100 parts with all other conditions remaining the same. The results are shown in Table 2.

### Comparative Example 2

The procedures described in Example 1 were repeated wherein the temperature of heat-treatment was changed to 120°C with all other conditions remaining the same. The results are shown in Table 2.

### Comparative Example 3

The procedures described in Example 1 were repeated wherein the temperature of heat-treatment was changed to 230°C with all other conditions remaining the same. The results are shown in Table 2.

### Comparative Example 4

The procedures described in Example 1 were repeated wherein the amount of nitrile group-containing copolymer rubber 1 was changed from 70 parts to 30 parts and the amount of particles of methyl methacrylate polymer A was changed from 30 to 70 parts with all other conditions remaining the same.

The rubber composition and the vulcanizable rubber composition exhibited poor rubber elasticity, and the rubber vulcanizate was fragile and a test specimen for evaluation of ozone resistance was difficult to prepare. When the specimen was drawn, it was broken before it was elongated by 30%.

### Comparative Example 5

The procedures desoribed in Example 1 were repeated wherein particles of methyl methacrylate polymer C (Acryl paste F360, available from Zeon Kasei K.K., average particle diameter: 35 µm, weight average molecular weight: about 3,000,000, glass transition temperature: 107°C, the average particle diameter not satisfying the requirements for acrylic resin (2)) was used instead of methyl methacrylate polymer A prepared in Synthesis Example 1 with all other conditions remaining the same. The results are shown in Table 2.

### Synthesis Example 2 (Synthesis of acrylic resin not satisfying the requirements for acrylic resin (2))

Polymerization was carried out by the same procedures as described in Synthesis Example 1 wherein 95 parts of methyl methacrylate and 5 parts of methacrylic acid were used instead of 100 parts of methyl methacrylate with all other conditions remaining the same. The polymerization conversion was 97.9%. The solid content was about 39%. Thus-obtained particles of modified methyl methacrylate polymer (i.e., methyl methacrylate copolymer) had an average particle diameter of about 0.1 µm. The methyl methacrylate copolymer had a weight average molecular weight of about 1,060,000 and a glass transition temperature of 105°C. This acrylic resin contained about 0.06 equivalent weight of carboxyl group per 100 g of the resin. Thus the acrylic resin contained a large amount of crosslink-forming carboxyl groups and did not satisfy the requirements for acrylic resin (2).

### Comparative Example 6

The procedures described in Example 1 were repeated wherein particles of methyl methacrylate copolymer obtained in Synthesis Example 2 were used instead of particles of methyl methacrylate polymer A with all other conditions remaining the same. The results are shown in Table 2.

**Table 1**

| | Examples | | | | | | |
|---|---|---|---|---|---|---|---|
| | 1 | 2 | 3 | 4 | 5 | 6 | 7 |
| Composition (wt. parts) | | | | | | | |
| Rubber 1 (AN content: 40%) | 70 | - | 60 | 80 | - | - | 70 |
| Rubber 2 (AN content: 40%) | - | 70 | - | - | - | - | - |
| Rubber 3 (AN content: 33.5%) | - | - | - | - | 70 | - | - |
| Rubber 4 (AN content: 42.5%) | - | - | - | - | - | 70 | - |
| MMA polymer A particles | 30 | 30 | 40 | 20 | 30 | 30 | - |
| MMA polymer B particles | - | - | - | - | - | - | 30 |
| Mixing of rubber with resin | | | | | | | |
| Mixing procedure | D | L | D | D | D | D | D |
| Temperature (°C) | 180 | 180 | 180 | 180 | 180 | 180 | 180 |
| Ozone Resistance | | | | | | | |
| 24 hours | NC | NC | NC | NC | NC | NC | NC |
| 48 hours | NC | NC | NC | NC | NC | NC | NC |
| 72 hours | NC | NC | NC | NC | NC | NC | NC |
| Note, Rubber = Nitrile group-containing copolymer rubber MMA polymer A = methyl methacrylate polymer A (particle diameter: 0.1 µm; T=106°C, free from crosslink-forming functional group) MMA polymer B - methyl methacrylate polymer B (particle diameter: 1.5 µm; T=107°C, free from crosslink-forming functional group) Mixing procedure: D: dry blending L: latex co-precipitation | | | | | | | |

**Table 2**

| | | Comparative Examples | | | | |
|---|---|---|---|---|---|---|
| | 1 | 2 | 3 | 4 | 5 | 6 |
| Composition (wt. parts) | | | | | | |
| Rubber 1 (AN content: 40%) | 100 | 70 | 70 | 30 | 70 | 70 |
| MMA polymer A particles | - | 30 | 30 | 70 | - | - |
| MMA polymer C particles | - | - | - | - | 30 | - |
| MMA copolymer particles | - | - | - | - | - | 30 |
| Mixing of rubber with resin | | | | | | |
| Mixing procedure | - | D | D | D | D | D |
| Temperature (°C) | - | 120 | 230 | 180 | 180 | 180 |
| Ozone Resistance | | | | | | |
| 24 hours | C-2 | C-3 | NC | - | C-3 | NC |
| 48 hours | C-5 | Break | B-2 | - | C-5 | C-1 |
| 72 hours | Break - | | B-2 | - | Break | Break |
| Note, Rubber = Nitrile group-containing copolymer rubber MMA polymer A = methyl methacrylate polymer A (particle diameter: 0.1 µm; T=106°C, free from crosslink-forming functional group) MMA polymer C = methyl methacrylate polymer C (particle diameter: 35 µm; T=107°C, free from crosslink-forming functional group) MMA copolymer - methyl methacrylate copolymer (particle diameter; 0.1 µm; T=105°C, 0.06 eq. wt. of crosslink-forming functional group per 100 g of resin) Mixing procedure: D: dry blending | | | | | | |

As seen from the tables, a rubber vulcanizate not containing an acrylic resin (Comparative Example 1), a rubber vulcanizate prepared at a too low heat-treating temperature (Comparative Example 2) and a rubber vulcanizate containing acrylic resin particles with too large particle diameter (Comparative Example 5) had poor ozone resistance. A rubber vulcanizate prepared at a too high heat-treating temperature (Comparative Example 3) and a rubber vulcanizate containing acrylic resin particles with a large number of crosslink-forming functional groups (Comparative Example 6) exhibited relatively good ozone resistance even when the ozone resistance was tested under 30% elongation which was more severe than ordinary elongation (10% or 20% elongation), in the case when the testing period of time was short. But, in the case when the testing period of time was long, the rubber was deteriorated and the ozone resistance was poor. A rubber vulcanizate containing a too large amount of acrylic resin particles (Comparative Example 4 )had poor rubber elasticity and was fragile, and the ozone resistance could not be evaluated.

In contrast, rubber vulcanizates of the present invention (Examples 1 to 7) exhibited good ozone resistance even when the test was conducted under severe conditions.

The rubber vucanizates of Examples 1-7 and Comparative Examples 1-3, 5 and 6 exhibited physical properties at ordinary temperature similar to those of general rubber vulcanizates.

### Industrial Applicability

Rubber vucanizates made by the process of the present invention have enhanced ozone resistance, and therefore are suitable for industrial parts such as rolls, hoses, belts and sealing members. The rubber vulcanizates are especially useful for automobile rubber parts such as packings, fuel hoses, air-intake hoses, air duct hoses, boot materials, oil seals and automobile interior trims.

## Claims

1. A process for producing a rubber vulcanizate comprising:
heat-treating a polymer composition comprising 40 to 90% by weight of a nitrile group-containing copolymer rubber (1), and 60 to 10% by weight of particles having an average particle diameter of not larger than 10 µm comprised of an acrylic resin (2) comprising monomer units selected from methyl acrylate units and methyl methacrylate units as the main structural units and containing not larger than 0.01 equivalent weight, per 100 g of the acrylic resin (2), of a crosslink-forming functional group, at a temperature in the range of (T+20)°C to (T+90)°C wherein T is a temperature (°C) which is selected from the glass transition temperature of acrylic resin (2) and the melting temperature of acrylic resin (2), and is higher than the other of the two temperatures, to thereby prepare a rubber composition;
incorporating a vulcanizer in the rubber composition to prepare a vulcanizable rubber composition; and
vulcanizing the vulcanizable rubber composition.

2. A rubber vulcanizate produced by the process as claimed in claim 1.

3. A polymer composition comprising 40 to 90% by weight of (1) a nitrile group-containing copolymer rubber, and 60 to 10% by weight of particles having an average particle diameter of not larger than 10 µm comprised of (2) an acrylic resin comprising monomer units selected from methyl acrylate units and methyl methacrylate units as the main structural units and containing not larger than 0.01 equivalent weight, per 100 g of the acrylic resin (2), of a crosslink-forming functional group.

4. The polymer composition according to claim 3, wherein the nitrile group-containing copolymer rubber (1) is substantially free from a halogen.

5. The polymer composition according to claim 3, wherein the nitrile group-containing copolymer rubber (1) has a Mooney viscosity (ML₁₊₄, 100°C) in the range of 10 to 300.

6. The polymer composition according to claim 3, wherein the particles of acrylic resin (2) are made by an emulsion polymerization procedure or a suspension polymerization procedure.

7. The polymer composition according to claim 3, wherein the content of a halogen in the acrylic resin (2) is not larger than 0.5% by weight.

8. A rubber composition prepared by heat-treating the polymer composition as claimed in claim 1, at a temperature in the range of (T+20)°C to (T+90)°C wherein T is a temperature (°C) selected from a glass transition temperature of the acrylic resin (2) and the melting temperature of the acrylic resin (2), and is higher than the other of the two temperatures.

9. A vulcanizable rubber composition prepared by incorporating a vulzanizer in the rubber composition as claimed in claim 8.
